# EUROPÄISCHE PATENTANMELDUNG

(11) **EP 1 675 245 A2**
(43) Veröffentlichungstag der Anmeldung: **28.06.2006**
(21) Anmeldenummer: 05112485.7
(22) Anmeldetag: 20.12.2005
(51) Int. Cl.: H02H 7/06, H02H 9/04

(54) **Schaltungsanordnung zur schnellen Reduzierung des in der Erregerwicklung eines Generators induzierten Freilaufstromes**

(30) Priorität: 23.12.2004 DE 102004062032
(71) Anmelder: ROBERT BOSCH GMBH, 70442 Stuttgart (DE)
(72) Erfinder: Suelzle, Helmut, 71691 Freiberg (DE)

(57) **Zusammenfassung**

Es wird eine Schaltungsanordnung zur schnellen Reduzierung eines induzierten Stroms angegeben, die insbesondere in Verbindung mit einem Spannungsregler (R) für einen Generator (G) in einem Fahrzeugbordnetz einsetzbar ist und eine Erhöhung der Freilaufspannung bewirkt. Damit kann die in der beim Abschalten von Verbrauchern in der Erregerwicklung (E) induzierte Überspannung schnell abgebaut werden und der Generator somit schnell entregt werden.

## Beschreibung

Die Erfindung betrifft Schaltungsanordnungen zur schnellen Reduzierung eines induzierten Stroms nach der Gattung des Hauptanspruchs.

### Stand der Technik

Bei verschiedenen Anwendungen werden Ströme mit Hilfe von Schaltungen, insbesondere Transistoren, ein- und ausgeschaltet. Befindet sich im betreibenden Stromkreis eine Induktivität, hängt der zeitliche Verlauf des geschalteten Stroms von der Höhe der Induktivität ab und ändert sich üblicherweise nach einer e-Funktion.

Diese Problematik tritt auch bei der Spannungsregelung von Generatoren, beispielsweise Kraftfahrzeuggeneratoren, auf. Stellgröße für die Spannungsregelung in Kraftfahrzeuggeneratoren ist der Erregerstrom, also der Strom, der durch die Erregerwicklung des Generators fließt und das Erregerfeld erzeugt. Die Spannungsregelung selbst wird über die Kontrolle des Erregerstroms realisiert. Dies geschieht mittels einer Endstufe eines Reglers, die wenigstens einen Schalttransistor umfasst. Dieser Schalttransistor der Endstufe des Reglers schaltet den Erregerstrom ein und aus. Das so genannte Erregerstrom-Takt-Verhältnis wird dabei so verändert, dass sich die Ausgangsspannung des Generators auf gewünschte Werte einstellt.

Der zeitliche Verlauf und somit die Höhe des Erregerstroms innerhalb eines Intervalls, also innerhalb eines Schaltzyklus, ist unter anderem von der Zeitkonstante der sich im Schaltkreis befindlichen Induktivität abhängig. Maßgeblich für die Höhe dieser Induktivität ist die Erregerwicklung und somit der Läufer des Generators, der die Erregerwicklung trägt.

Prinzipiell gilt: Wird die Endstufe eingeschaltet, steigt der Erregerstrom an. Wird die Endstufe ausgeschaltet, klingt der Erregerstrom ab. Sowohl der Anstieg des Erregerstroms als auch das Abklingen des Erregerstroms erfolgt jeweils als e-Funktion. Der zeitliche Verlauf des Erregerstroms und damit seine Zeitkonstante hängt also von der Größe der Induktivität der Erregerwicklung ab. Die Zeitkonstante wird üblicher Weise als Läuferzeitkonstante bezeichnet, da die Erregerwicklung sich auf dem Läufer des Generators befindet.

Wie bekannt ist, kommt es beim Abschalten einer elektrischen Belastung im Bordnetz zu einer Spannungsüberhöhung, die vom Regler nur so schnell ausgeregelt werden kann, wie es die Läuferzeitkonstante erlaubt. Diese Spannungsüberhöhung kann bei entsprechender Höhe und Dauer zur Folge haben, dass sich im Bordnetz befindliche Steuergeräte zum Eigenschutz abschalten oder schlimmstenfalls zerstört werden und die damit dargestellten Funktionen nicht mehr zur Verfügung stehen.

Ein Spannungsregler für einen Generator in einem Kraftfahrzeug, der den Erregerstrom regelt, ist aus der DE 102 19 823 A 1 bekannt. Dieser Regler umfasst gegenüber anderen bekannten Reglern zusätzlich einen Referenztransistor, mit dem der Erregerstrom laufend gemessen werden kann. Der gemessene Erregerstrom wird dann bei der Regelung mitberücksichtigt. Der Induktivität der Erregerwicklung ist in üblicher Weise eine Freilaufdiode parallel geschaltet, die nach Öffnen des Transistors der Endstufe den Freilauf des Erregerstroms ermöglicht. Die Geschwindigkeit der Reduzierung des Erregerstromes hängt, ebenso wie die benötigte Zeitspanne, auch von den Eigenschaften der Freilaufdiode ab. Eine Reduzierung des Erregerstroms in kürzerer Zeit als mittels einer Freilaufdiode wird beim bekannten Spannungsregler nicht vorgesehen.

### Vorteile der Erfindung

Die erfindungsgemäße Schaltungsanordnung mit den Merkmalen des Anspruchs 1 hat den Vorteil, dass eine Reduzierung des durch eine Induktivität fließenden Stroms in kürzerer Zeit als beim Stand der Technik möglich ist. Damit wird in vorteilhafter Weise auch die Zeit der Spannungsüberhöhung für anschließbare Verbraucher verkürzt.

Insbesondere wird die Zeit der Spannungsüberhöhung in einem Generator-Regler-System mit einer Regelung des Erregerstromes reduziert. Erzielt werden diese Vorteile, indem die in der Induktivität, insbesondere die Induktivität der Erregerwicklung bzw. die im Läufer des Generators enthaltene Energie schneller abgebaut wird. Dazu wird die Spannung im Freilaufkreis erhöht, wobei Mittel vorgesehen sind, die diese Spannungserhöhung ermöglichen und der Freilaufdiode parallel geschaltet sind oder mit ihr in Reihe geschaltet sind, bzw. die Freilaufdiode ganz ersetzen.

Besonders vorteilhaft ist auch, dass möglicherweise auftretende Überspannungen durch Lastabschaltung, schnelle Drehzahlerhöhung, Reduzierung der Sollspannung im Regler durch Vorgabe, schnell ausregelbar sind, wobei das Gesamtsystem keine konstruktiven Änderungen an der Erregerwicklung, dem Läufer oder dem Generator erfordert. Damit ist die Erfindung besonders vorteilhaft einsetzbar und der Generator kann weiterhin auf Optimierung von Stromabgabe, Wirkungsgrad, Größe, Gewicht... ausgelegt werden.

Weitere Vorteile der Erfindung werden durch die in den Unteransprüchen angegebenen Maßnahmen erzielt. Diese Maßnahmen umfassen beispielsweise die Parallelschaltung einer Z- bzw. Zenerdiode zur Freilaufdiode unter zusätzlicher Reihenschaltung eines Schalters und Ansteuerung dieses Schalters derart, dass sich eine Spannungserhöhung einstellt, wodurch eine erhöhte Spannung im internen Freilaufkreis erhalten wird.

Eine weitere vorteilhafte Lösung legt eine Parallelschaltung einer Zenerdiode und eines Transistors zwischen die Erregerwicklung mit einer bestimmten Induktivität und Masse, wobei die Beschaltung derart ist, dass die Erregerwicklung jeweils an den Kathoden der Zenerdiode und der Freilaufdiode angeschlossen ist, wodurch ein diskreter Freilauf realisieren lässt. Die Zenerdiode, der Transistor und eine zweite Steuereinheit bilden vorteilhafter Weise eine zweite Einheit, die in besonders vorteilhafter Ausgestaltung auf einem andere Chip als die erste Einheit angeordnet ist.

Eine weitere vorteilhafte Ausgestaltung der erfindungsgemäßen Schaltungsanordnung stellt einen externen Freilauf über das Bordnetz her. Die zweite Diode, der zweite Transistor und eine zweite Steuereinheit bilden vorteilhafter Weise eine zweite Einheit, die in besonders vorteilhafter Ausgestaltung auf einem andere Chip als die erste Einheit angeordnet ist.

Die Verteilung auf zwei Chips ermöglicht eine vorteilhafte Partitionierung, bei der Mehrkosten durch zusätzliche Chipfläche nur dann anfallen, wenn die erfindungsgemäße Funktion auch benötigt und eingesetzt wird. Ein Kosteneinfluss auf die Standardapplikation tritt somit nicht auf. Die Verwendung einer Partitionierung mit einem separaten Chip ermöglicht es, in vorteilhafter Weise den herkömmlichen IC für die Großserie ohne Veränderung in großer Stückzahl herzustellen. Dabei kann also der bisherige IC mit der eigentlichen Regelung und Kundenschnittstelle weiter verwendet werden und die Zusatzkosten für den zweiten IC fallen nur bei Bedarf an.

### Zeichnung

Drei Ausführungsbeispiele der Erfindung sind in der Zeichnung dargestellt und werden in der nachfolgenden Beschreibung näher erläutert.

### Dabei zeigen im Einzelnen:

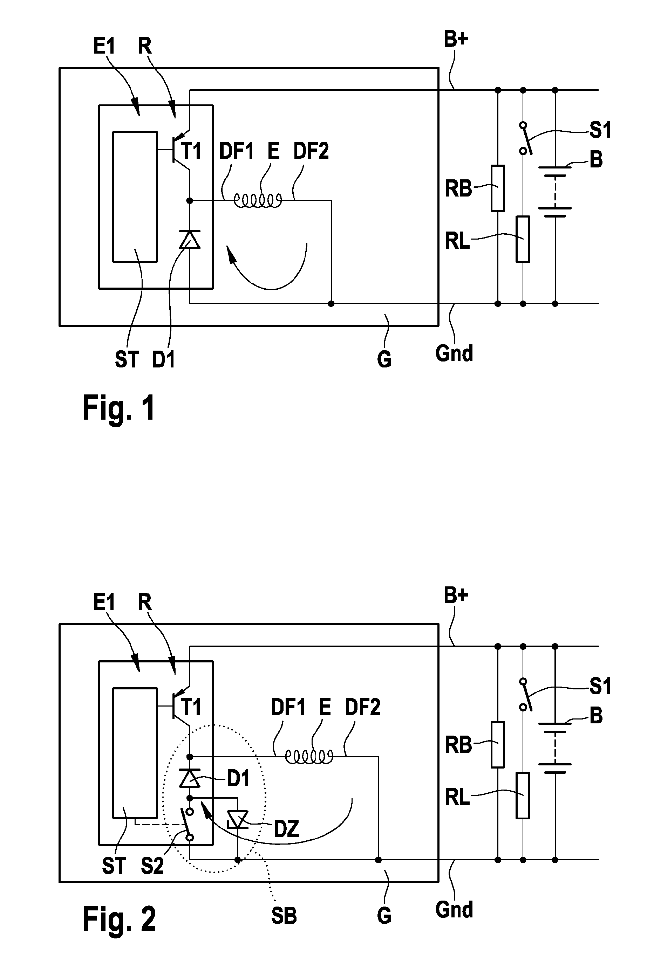

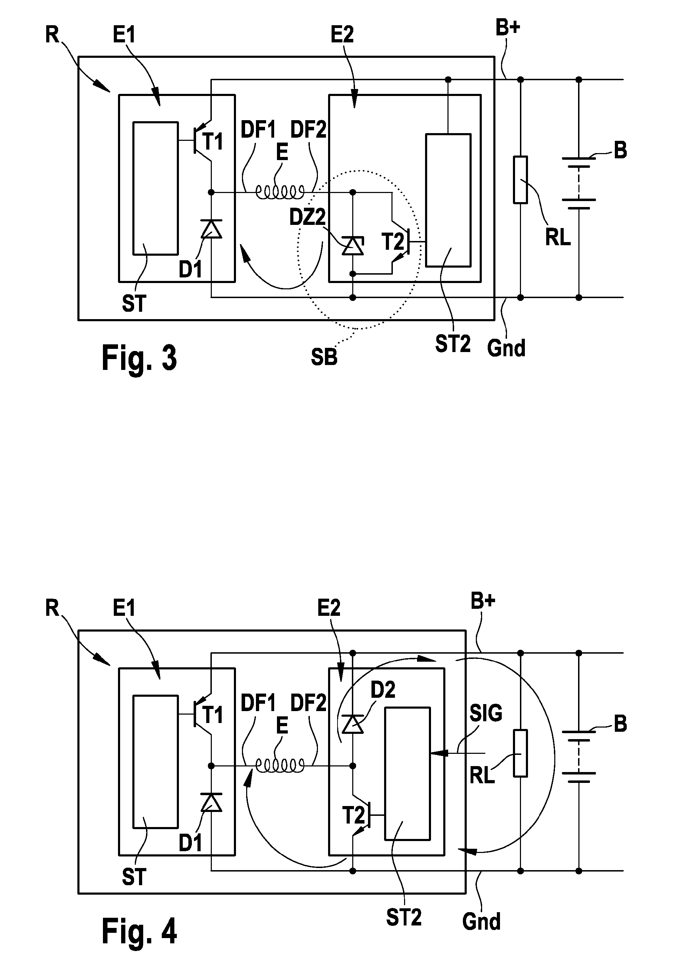

Figur 1 eine Schaltskizze nach dem Stand der Technik, Figur 2 ein erstes Ausführungsbeispiel für eine erhöhte Spannung im internen Freilaufkreis, Figur 3 ein zweites Ausführungsbeispiel für eine erhöhte Spannung als Schaltskizze für einen diskreten Freilauf und Figur 4 ein drittes Ausführungsbeispiel als Schaltskizze für einen externen Freilauf über das Bordnetz.

### Beschreibung

Die Erfindung betrifft generell Schaltungsanordnungen zur schnellen Reduzierung eines induzierten Stroms und wird speziell anhand der Zu- und Abschaltung des durch die Erregerwicklung eines Generators fließenden Erregerstroms mit Hilfe eines Reglers, erläutert. Ein solches System ist beispielsweise ein in einem Fahrzeugbordnetz eingebauter Generator mit einem Spannungsregler, der den Erregerstrom des Generators regelt und damit die Ausgangsspannung des Generators auf vorgebbare Werte von beispielsweise 12 bis 14 Volt einstellt. An den Generator angeschlossen sind in üblicher Weise die elektrischen Verbraucher des Bordnetzes sowie die zugehörige Fahrzeugbatterie.

Eine Schaltskizze nach diesem Stand der Technik ist in Figur 1 dargestellt. Dabei bezeichnet G den Generator mit den Anschlüssen B+ und Gnd. Der Spannungsregler bzw. der Regler R, der die Ausgangsspannung des Generators G regelt, umfasst einen Schalttransistor T1 und in Reihe zu diesem die Freilaufdiode D1. Zwischen dem Schalttransistor T1 und der Kathode, der Freilaufdiode D1, ist der Anschluss DF1 der Erregerwicklung E angeschlossen, der Anschluss DF2 ist mit Masse verbunden. Die Ansteuerung des Schalttransistors T wird mit Hilfe einer Steuerung bzw. eines Steuerteiles ST realisiert. Das Steuerteil ST, der Transistor T1 und die Freilaufdiode D1 bilden eine Einheit E1, sie können auf einem einzigen Chip realisiert sein. An Stelle der Freilaufdiode kann auch allgemein ein Freilaufelement eingesetzt, das entweder wenigstens eine Freilaufdiode oder wenigstens einen Widersand oder wenigstens einen Transistor oder eine Kombination dieser Elemente umfasst.

Vom Bordnetz sind lediglich ein Bordnetzwiderstand RB, ein Lastwiderstand RL, der über einen Schalter S1 zuschaltbar ist und die Batterie B dargestellt. Die Serienschaltung mit dem Schalter S 1 und dem Lastwiderstand RL liegt bei geschlossenem Schalter parallel zu den Bordnetzverbraucher und ist steht plusseitig mit dem Anschluss B+ in Verbindung. Masseseitig liegt das Bordnetz auf Masse Gnd.

Wird der Transistor T1 der Endstufe eingeschaltet, steigt der Erregerstrom IE durch die Erregerwicklung E nach einer e-Funktion an. Beim Ausschalten der Endstufe klingt der Erregerstrom IE nach einer e-Funktion in Abhängigkeit von der Induktivität der Erregerwicklung ab. Die Zeitkonstante der e-Funktion hängt im wesentlichen von der Induktivität der Erregerwicklung ab. Der Freilauf erfolgt folgendermaßen: nach Öffnen des Transistors T1 läuft der Erregerstrom IE des Läufers sich über den Pfad Klemme DF2 - über Diode D1 - Klemme DF1.

Beim Abschalten einer starken elektrischen Belastung im Bordnetz, beispielsweise durch Öffnen des Schalters S1 kommt es im Bordnetz zu einer Spannungsüberhöhung, die vom Regler nur so schnell ausgeregelt werden kann, wie es die Induktivität der Erregerwicklung bzw. die Zeitkonstante der e-Funktion erlaubt.

In Figur 2 ist ein erstes Ausführungsbeispiel der Erfindung dargestellt, mit dem die Spannung im Freilaufkreis erhöht werden kann, wodurch eine Reduzierung des Erregerstromes in kürzerer Zeit möglich ist, als mit dem bekannten System nach Figur 1.

Damit kann die beim Abschalten eines Hochlastverbrauchers RB auftretende Überspannung schneller abgebaut werden und das Bordnetz vor der Überspannung geschützt werden. Wesentlich bei diesem ersten Ausführungsbeispiel ist, dass im Regler R die Diode D1 durch eine Zenerdiode ergänzt wird, deren Kathode auf Masse liegt. Die Funktion der Zenerdiode DZ kann mittels eines parallel angebrachten Schalters S2 aktiviert oder deaktiviert werden. Die Ansteuerung des Schalters S2 erfolgt beispielsweise mit Hilfe der Steuereinrichtung S2 des Reglers R. Die übrigen Komponenten der Schaltung nach Figur 2 entsprechen denen nach Figur 1. Geeignete Werte für die Zenerdiode DZ sind beispielsweise eine Durchbruchspannung von 16 Volt und für die Freilaufdiode eine Flussspannung von 1,5 Volt. Als Schalter 52 kann beispielsweise ein geeigneter Transistor oder eine Transistorenanordnung eingesetzt werden. Grundsätzlich gilt, dass der mit SB bezeichnete Schaltungsbereich beispielhaft angegeben wird und auch andere Schaltungsbeispiele möglich sind.

Den Freilaufkreis bilden beim ersten erfindungsgemäßen Ausführungsbeispiel die Zenerdiode DZ, die Freilaufdiode D1 und der Schalter S2. Für die Abschätzung der Energie, die mit Hilfe dieses Freilaufkreises abgebaut werden soll, gelten folgende bekannte Zusammenhänge:

Die Energie, die in der Erregerwicklung E bzw. im Läufer enthalten ist, berechnet sich in einem ersten Ansatz nach: W=U*I*t, wobei U die Spannung über dem kompletten Freilaufkreis ist, I der Strom im Freilaufkreis und t die Zeit, während der der Strom fließt. Der Anfangsstrom ist durch den aktuellen Betriebszustand bestimmt.

Die Formel für die abzubauende Energie W zeigt, dass, sofern die Spannung U im Freilaufkreis erhöht wird, die Zeit, während der der Freilaufstrom fließt, im gleichen Maß reduziert wird, da das Produkt für die Energie W=U*I*t konstant bleibt. Eine Spannungserhöhung im Freilaufkreis erlaubt somit eine schnellere Ausregelung einer Überspannung, die beispielsweise durch eine Lastabschaltung im Bordnetz oder eine schnelle Erhöhung der Generatordrehzahl oder eine Reduzierung der Sollspannung im Regler durch Vorgabe eines geringeren Wertes verursacht wird. Dabei ist es nicht erforderlich, die Läuferzeitkonstante bzw. die Induktivität der Erregerwicklung durch konstruktive Maßnahmen im Generator, insbesondere der Erregerwicklung zu verändern. Eine solche Änderung von konstruktiven Maßnahmen im Generator hätte negative Auswirkungen auf dessen Funktions- bzw. Leistungsfähigkeit, da der Generator üblicherweise auf Größen wie Stromabgabe, Wirkungsgrad, Baugröße oder Gewicht optimiert ist. Durch die erfindungsgemäße Erhöhung der Spannung im Freilaufkreis können also die primären Eigenschaften des Generators beibehalten werden. Es ist dabei möglich, herkömmliche Generator-Regler-Systeme einzusetzen und diese mit geringen Änderungen so abzuändern, dass die gewünschte höhere Spannung im Erregerkreis erhalten wird.

Die Funktionsweise des Ausführungsbeispiels nach Figur 2, bei dem eine erhöhte Spannung im inneren Freilaufkreis erzeugt wird, ist wie folgt:

Im Normalbetrieb ist der Schalter S2 geschlossen. Nach Öffnen des Transistors T1 läuft der Erregerstrom IE des Läufers sich über den Pfad Anschluss DF2 ― über Freilaufdiode D1 - über Schalter S2 - über Anschluss DF 1 frei.

Soll schnell entregt werden, beispielsweise nach der Abschaltung eines starken Verbrauchers RL durch Öffnen des Schalters S1, wird der Schalter S2 geöffnet. Da DZ in diesem Fall eine Zenerdiode ist, die beispielsweise eine Spannung von 16 Volt hat und D1 eine Flussspannung von 1,5 Volt, ergibt sich eine erhöhte Spannung im inneren Freilaufkreis. Nach Öffnen des Transistors T1 läuft der Erregerstrom des Läufers sich über den Pfad Anschluss DF2 - über Zenerdiode DZ - über Freilaufdiode D 1 - über Anschluss DF1 frei. Da die Zenerdiode einen höheren Spannungsfall aufweist, läuft der Erregerstrom IE schneller aus als bei herkömmlichen Freilaufkreisen und die Zeit, während der Überspannungen entstehen können, verkürzt sich und möglicherweise doch entstehende Überspannungen werden schneller abgebaut.

Das Ausführungsbeispiel nach Figur 3 zeigt eine Schaltskizze mit diskretem Freilauf. In diesem Fall ist gegenüber dem Stand der Technik nach Figur 1 zusätzlich zur Einheit E1 eine weitere Einheit E2 vorhanden, die sich beispielsweise zusammensetzt aus einer Zenerdiode DZ2, die zwischen dem Anschluss DF2 der Erregerwicklung E und Masse Gnd liegt. Parallel zu dieser Zenerdiode DZ2 liegt die Schaltstrecke eines Transistors T2, der von einer Steuerung ST2 angesteuert wird. Die Zenerdiode DZ2 weist dabei beispielsweise eine Sperrspannung von 16 Volt auf, während D1 wiederum eine Flussspannung von 1,5 Volt hat und der Transistor T2 einen niedrigen Spannungsfall aufweist. Im Schaltungsbereich SB sind auch andere Schaltungsbeispiele möglich.

Im Normalbetrieb ist der Transistor T2 geschlossen. Nach Öffnen des Transistors T1 läuft der Erregerstrom des Läufers sich über den Pfad Anschluss DF2 - über Transistor T2 - über Freilaufdiode D1 - über Anschluss DF1 frei.

Soll schnell entregt werden, beispielsweise nach Abschalten einer Last RL, wird der Transistor T2 durch ein entsprechendes Ansteuersignal, beispielsweise von der Steuerung ST2 geöffnet. In diesem Fall läuft sich der Erregerstrom des Läufers nach dem Öffnen des Transistors T 1 über den Pfad Anschluss DF2 - Zenerdiode DZ2- Diode D1 - Anschluss DF1 frei. Da die Zenerdiode DZ2 einen höheren Spannungsfall aufweist, läuft der Erregerstrom schneller aus.

Das Ausführungsbeispiel nach Figur 4 ist prinzipiell gleich aufgebaut wie das Ausführungsbeispiel nach Figur 3. Die Einstellung ist jedoch so, dass ein externer Freilauf über das Bordnetz stattfindet. Dazu ist die Einheit E2 des Reglers R auf eine Spannungsschwelle eingestellt, die über dem Arbeitsbereich der Einheit E1 liegt. Dabei sind verschiedene Realisierungen möglich.

Im Normalbetrieb ist der Transistor T2 nach Power-on durchgeschaltet und hat keinen Einfluss auf das Regelverhalten. Die Einheit Transistor T1/ Freilaufdiode D1 übernimmt die Regelungsfunktion, wobei der Freilauf über Läufer - Anschluss DF2 - Transistor T2-Freilaufdiode D1 - Anschluss DF1 - Läufer erfolgt.

Im Fall einer Schnellentregung bei Lastabschaltung erfolgt der Stromabbau wie folgt: Durch Erkennung einer Überspannung (Einheit 2 etwas höher als Einheit 1) schalten beide Transistoren T1 und T2 ab.

Bei Reduzierung der Sollspannung U_{SOLL} ist eine Realisierung wie für den Fall der Überspannung nicht möglich, da die Einheit E2 keine Überspannung erkennen kann. Die Einheit E2 muss daher an den Kommunikationsweg angebunden sein und auf bestimmte Signale oder Befehle, die von extern geliefert werden, mit Abschalten des Transistors T2 reagieren. Beispielsweise sind Sollwertvorgaben in engen Bereichen oder Sondersignale auch über zusätzliche Leitungen möglich. Diese Sondersignale SIG werden dem Regler bzw. den Einheiten E1, E2 des Reglers über entsprechende Schnittstellen zugeführt, sie können beispielsweise von einem Steuergerät geliefert werden.

Der Freilauf erfolgt in diesem Fall wie folgt: Läufer - Anschluss DF2 - Diode D2 - Bordnetz - Diode D1- Anschluss DF1- Läufer.

Die beiden Ausführungsbeispiele nach Figur 3 und 4 erlauben die Verteilung der Einheiten E1 und E2 auf zwei getrennten Chips. Die zweite Diode, der zweite Transistor und eine zweite Steuereinheit bilden dann eine zweite Einheit

Die Verteilung auf zwei Chips ermöglicht eine vorteilhafte Partitionierung, bei der Mehrkosten durch zusätzliche Chipfläche nur dann anfallen, wenn die erfindungsgemäße Funktion auch benötigt und eingesetzt wird. Ein Kosteneinfluss auf die Standardapplikation tritt somit nicht auf. Die Verwendung einer Partitionierung mit einem separaten Chip ermöglicht es, den herkömmlichen IC für die Großserie ohne Veränderung in großer Stückzahl herzustellen. Dabei kann also der bisherige IC mit der eigentlichen Regelung und Kundenschnittstelle weiter verwendet werden und die Zusatzkosten für den zweiten IC fallen nur bei Bedarf an.

## Patentansprüche

1. Schaltungsanordnung zur schnellen Reduzierung eines induzierten Stromes, mit einer Induktivität, die über Schaltmittel an eine Spannung gelegt und von dieser wieder getrennt werden kann und einem Freilaufkreis, der ein Freilaufelement umfasst, das zwischen dem Schaltmittel und Masse liegt, **dadurch gekennzeichnet, dass** eine Freilaufschaltung vorgesehen ist, der zusätzlich Mittel zur Spannungserhöhung umfasst.

2. Schaltungsanordnung nach Anspruch 1, **dadurch gekennzeichnet, dass** sie Bestandteil eines Spannungsreglers ist, der die Ausgangsspannung eines Generators regelt und die Induktivität die Erregerwicklung des Generators ist, deren Abschaltenergie abzubauen ist.

3. Schaltungsanordnung nach Anspruch 1 oder 2, **dadurch gekennzeichnet, dass** die Freilaufschaltung eine Zenerdiode umfasst, die zwischen dem Schaltmittel und Masse liegt und ein weiterer Schalter mit dem Freilaufelement in Serie geschaltet ist, parallel zur Zenerdiode.

4. Schaltungsanordnung nach Anspruch 1, 2, 3 oder 4, **dadurch gekennzeichnet, dass** das Freilaufelement eine Freilaufdiode oder ein Widersand oder ein Transistor oder eine Kombination dieser Elemente umfasst.

5. Schaltungsanordnung nach Anspruch 1, 2, 3 oder 4, **dadurch gekennzeichnet, dass** der erste Schalter und der zweite Schalter ein Transistor ist und beide Transistoren mit ihrer Basis mit einer Steuereinrichtung in Verbindung stehen.

6. Schaltungsanordnung nach einem der vorhergehenden Ansprüche, **dadurch gekennzeichnet, dass** eine Schnellentregung des Generators erfolgt.

7. Schaltungsanordnung nach einem der vorhergehenden Ansprüche, **dadurch gekennzeichnet, dass** eine Erhöhung der Freilaufspannung auf etwa 16 Volt bewirkt wird.

8. Schaltungsanordnung nach einem der vorhergehenden Ansprüche, **dadurch gekennzeichnet, dass** eine zweite Reglereinheit vorhanden ist, die zusätzlich zur ersten Reglereinheit vorhanden ist und mit dem DF2-Anschluss der Erregerwicklung in Verbindung steht, wobei die zweite Reglereinheit eine Parallelschaltung aus einem Transistor T2 und einer Zenerdiode D2 umfasst sowie eine Ansteuereinrichtung S2, die den Transistor T2 ansteuert.

9. Schaltungsanordnung nach einem der vorhergehenden Ansprüche, **dadurch gekennzeichnet, dass** eine zweite Reglereinheit vorhanden ist, die zusätzlich zur ersten Reglereinheit vorhanden ist und mit dem DF2-Anschluss der Erregerwicklung in Verbindung steht, wobei die zweite Reglereinheit eine Serienschaltung aus einem Transistor T2 und einer Diode D2 besteht sowie einer Ansteuereinrichtung S2, die den Transistor T2 ansteuert.

10. Schaltungsanordnung nach einem der vorhergehenden Ansprüche, **dadurch gekennzeichnet, dass** die Spannung in den beiden Reglereinheiten so dimensioniert wird, dass ein Freilauf über das Bordnetz erfolgt.

11. Schaltungsanordnung nach einem der vorhergehenden Ansprüche, **dadurch gekennzeichnet, dass** die beiden Reglereinheiten auf getrennten Chips angeordnet sind.

12. Schaltungsanordnung nach Anspruch 10, **dadurch gekennzeichnet, dass** die erste Reglereinheit den eigentliche Regler bildet und/oder die Schnittstelle zu einem weiteren Steuergerät aufweist.
